# FASCICULE DE BREVET EUROPEEN

(11) **EP 4 103 855 B1**
(45) Date de publication et mention de la délivrance du brevet: **03.04.2024**
(21) Numéro de dépôt: 20716178.7
(22) Date de dépôt: 14.02.2020
(51) Int. Cl.: F16C 7/06

(54) **BIELLE AJUSTABLE EN LONGUEUR MUNIE D'UN DISPOSITIF DE COUPLE RÉSISTANT**
LÄNGSVERSTELLBARE ZUG-DRUCK-STANGE MIT WIDERSTANDSMOMENTVORRICHTUNG
LENGTH ADJUSTABLE CONNECTING ROD WITH A RESTISTING TORQUE DEVICE

(43) Date de publication de la demande: 21.12.2022
(73) Titulaire: Epsilon Composite, 33340 Gaillan en Medoc (FR)
(72) Inventeur: CHAUMET, Yann, 33340 Gaillan en Medoc (FR); PORTOLES, José, 33340 Queyrac (FR); ALBISTUR, Valentin, 33250 Saint-Julien Beychevelle (FR)
(74) Mandataire: Novagraaf Technologies
(86) Numéro de dépôt international: PCT/FR2020/000032
(87) Numéro de publication internationale: WO 2021/160941

(56) Documents cités:
- WO-A1-2013/164243
- DE-U1-202004 004 407
- DE-U1-202004 016 321

## Description

La présente invention concerne le domaine technique des bielles, arbres et bras destinés à être positionnés entre deux organes fixes ou mobiles dont la longueur peut être réglable afin de s'ajuster et concerne en particulier une bielle ajustable en longueur munie d'un dispositif de couple résistant.

### Etat de la technique

Les bielles de ce type sont utilisées par exemple entre un organe fixe et un organe mobile tel qu'un mécanisme de volet. En raison des tolérances de fabrication et de montage des différents organes, la distance entre les deux peut fluctuer selon ces tolérances de plusieurs millimètres. Pour pouvoir mettre en place la bielle, il faut pouvoir ajuster sa longueur. Ceci est possible grâce à des bielles ajustables en longueur comprenant un élément de jonction comme par exemple une fourche, une rotule ou une chape métallique et un tube qui coopère grâce à un dispositif fileté afin de changer la longueur de la bielle lorsque celle-ci est mise en place. La bielle ajustable en longueur peut également comprendre un dispositif de freinage en rotation qui agit sur le mouvement de rotation afin d'appliquer une force de verrouillage déterminée entre la fourche et le tube et ainsi empêcher un changement de longueur intempestif de la bielle lorsqu'elle n'est pas sollicitée pour faire varier volontairement sa longueur, comme dans le cas de sollicitations dues à des vibrations, cycle de fatigue en traction, compression, flexion, gradient thermique jusqu'à 140°C.

Par exemple, le document WO2006042750 décrit une barre de traction-compression qui comprend une fourche et un tube, la rotation de la fourche autour du tube peut être verrouillée grâce à un dispositif de blocage qui comprend un anneau partiel muni d'un nez de verrouillage et une couronne dentée.

L'inconvénient d'un tel dispositif est qu'il nécessite une pièce intermédiaire telle qu'un manchon placé entre la fourche et le tube et comprenant deux filetages, un premier filetage situé sur la paroi externe du manchon permettant de relier le tube de la bielle et un deuxième filetage situé sur la paroi interne permettant de relier la fourche. Lors du montage de la bielle, le premier filetage doit être maintenu bloqué car seul le deuxième filetage intervient dans le réglage en longueur de la bielle. Ce double filetage complexifie la fabrication et le montage des pièces qui composent la bielle. De plus, si on veut sécuriser le blocage du premier filetage, il faut réaliser une étape supplémentaire consistant par exemple à coller le filetage.

D'autre part, le dispositif de blocage de la bielle décrit dans le document WO2006042750 agit sur le couple de serrage entre la fourche et le tube grâce au nez de verrouillage de l'anneau partiel qui se loge dans un espace de la couronne dentée. Or l'anneau partiel est connecté à la fourche grâce à un boulon déporté et un élément de connexion qui relie l'anneau partiel au boulon. Ces deux éléments de fixation sont proéminents par rapport à la circonférence extérieure de la bielle. De même les extrémités de la bague partielle sont dirigées vers l'extérieur et sont proéminents. Le positionnement de ces éléments peut blesser l'opérateur qui manipule et met en place la bielle.

De plus, le fait que l'anneau partiel soit fixé sur la bielle grâce à un élément de fixation déporté par rapport au plan dans lequel s'exerce l'effort de serrage crée un couple de serrage entre la fourche et le tube qui varie selon la position de la fourche dans le tube. En outre, le nez de verrouillage de l'anneau partiel n'est pas aligné, selon la direction de l'axe de rotation, sur l'élément de connexion ce qui induit que le couple de serrage n'est pas identique selon si l'opérateur tourne la bielle dans un sens ou dans l'autre. Par conséquent, le couple de serrage entre la fourche et le tube varie également selon le sens de réglage de la fourche par rapport au tube.

De même, la bielle décrite dans le document WO2011057627 comprend deux filetages dont un permet de modifier la longueur de la bielle. Ce filetage comprend un premier filet situé sur l'extérieur de la fourche qui coopère avec un second filet situé à l'intérieur d'une pièce de liaison. Un ressort presse deux éléments de verrouillage l'un contre l'autre dans le sens longitudinal de la bielle. Le ressort étant supporté avec ses extrémités entre la fourche et la pièce de liaison, il presse également le filet extérieur contre le filet intérieur du filetage qui permet de modifier la longueur de la bielle. Un des inconvénients de cette bielle réside dans le fait que le couple de serrage dépend du frottement entre les éléments de verrouillage mais dépend aussi du frottement entre les deux filets. Or le frottement entre les deux filets dépend de la surface en contact des filets, cette surface est minimum quand la fourche est complétement sorti et maximum quand elle est complétement rentrée. Par conséquent, le couple de serrage entre la fourche et le tube varie selon la position de la fourche dans le tube.

Enfin, le document WO2013/164243A1 décrit une bielle réglable en longueur avec un aménagement de verrouillage.

### Exposé de l'invention

C'est pourquoi, le but de l'invention est de réaliser une bielle ajustable en longueur munie d'un dispositif de couple résistant qui pallie aux inconvénients précités et en particulier qui comprend un seul filetage par extrémité et fournit un couple résistant constant et ce, quelque que soit la position de la fourche par rapport au tube.

Un autre but de l'invention est de proposer un procédé de fabrication simple et économique permettant de réaliser des bielles ajustables en longueur dont le dispositif de couple résistant fournit un couple résistant constant quelque que soit la position de la fourche par rapport au tube.

L'objet de l'invention est donc une bielle réglable en longueur ayant un axe longitudinal, comprenant un corps de bielle pourvu d'au moins un filetage intérieur, au moins un élément de jonction comportant un filetage extérieur coopérant avec le filetage intérieur du corps de bielle, le vissage ou dévissage du corps de bielle par rapport à l'élément de jonction permettant de régler la longueur de la bielle et au moins un dispositif de couple résistant entre le corps de bielle et l'élément de jonction, le dispositif de couple résistant comprenant au moins un élément presseur et un élément d'appui, l'élément presseur exerçant un effort sur l'élément d'appui qui oppose une résistance au mouvement de rotation du corps de bielle par rapport audit élément de jonction. La bielle est caractérisée en ce que l'élément d'appui est solidaire de l'élément de jonction et l'élément presseur est solidaire du corps de bielle et en ce que l'effort exercé par l'élément presseur sur l'élément d'appui se fait dans une direction transversale et perpendiculaire à l'axe longitudinal de la bielle.

Un autre objet de l'invention est un procédé pour fabriquer et assembler une bielle, comprenant les étapes suivantes :
a) un corps de bielle composé d'un embout, d'un insert fileté et d'un tube est fabriqué et assemblé selon une seule étape d'injection,
b) un élément de jonction est usiné d'une seule pièce de préférence dans un matériau métallique, avec une première extrémité libre et une seconde extrémité comportant un dispositif d'arrêt,
c) une bague crantée est montée solidairement sur l'élément de jonction,
d) un joint d'étanchéité est placé dans une gorge prévue sur l'élément de jonction à l'extrémité de la bague crantée,
e) au moins un poussoir à bille ou une lame ressort est placé dans un logement prévu à cet effet dans l'épaisseur de la paroi de l'embout,
f) l'élément de jonction est inséré et vissé dans le corps de bielle par coopération des filetages et jusqu'à ce que les deux lames, situées à l'extrémité opposée de l'extrémité libre de l'élément de jonction, parviennent en butée par leur élément d'arrêt sous forme d'un bourrelet faisant saillie radialement vers l'extérieur, contre l'extrémité de l'insert fileté, le dispositif d'arrêt étant ainsi automatiquement mis en place.

### Brève description des figures

Les buts, objets et caractéristiques de l'invention apparaîtront plus clairement à la lecture de la description qui suit faite en référence aux dessins dans lesquels :
[Fig. 1] représente la bielle selon l'invention avec deux éléments de jonction de type fourche,
[Fig. 2] représente une vue de côté de la fourche équipant une extrémité de la bielle,
[Fig. 3] représente une vue de côté de la fourche équipant une extrémité de la bielle à 90° par rapport à la vue de la figure 2,
[Fig. 4] représente une vue éclatée d'une extrémité du corps de bielle selon un premier mode de réalisation,
[Fig. 5] représente une coupe transversale de la bielle selon le premier mode de réalisation,
[Fig. 6a] représente une coupe longitudinale d'une extrémité de la bielle selon un réglage correspondant à une longueur intermédiaire selon le premier mode de réalisation,
[Fig. 6b] représente une coupe longitudinale d'une extrémité de la bielle selon un réglage correspondant à la longueur maximum selon le premier mode de réalisation,
[Fig. 6c] représente une coupe longitudinale d'une extrémité de la bielle selon un réglage correspondant à la longueur minimum selon le premier mode de réalisation,
[Fig. 7] représente une vue éclatée d'une extrémité du corps de bielle selon un second mode de réalisation,
[Fig. 8] représente une coupe transversale de la bielle selon le second mode de réalisation,
[Fig. 9] représente une coupe longitudinale d'une extrémité de la bielle selon un réglage correspondant à une longueur intermédiaire selon le second mode de réalisation.

### Description détaillée de l'invention

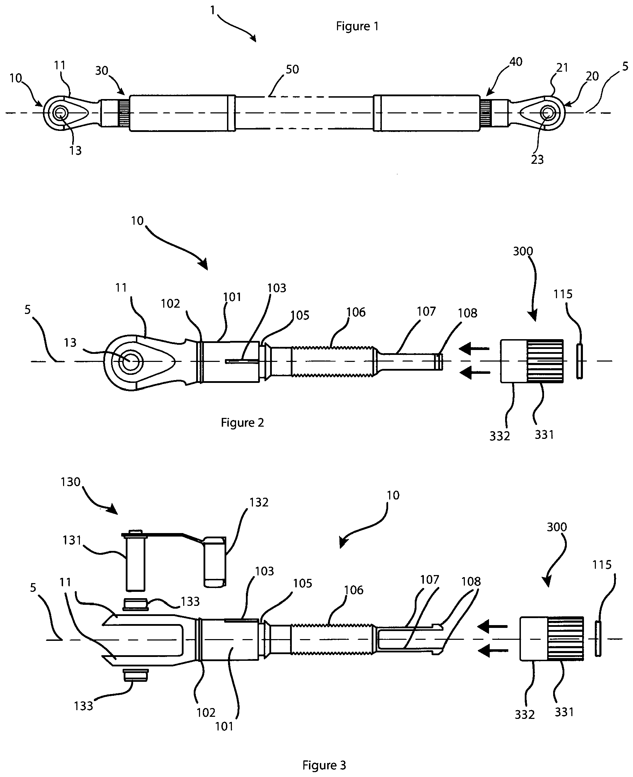

La figure 1 représente une bielle selon l'invention. La bielle 1 a une forme rectiligne et comprend un corps 50 allongé et creux dont le centre est représenté en pointillés sur la figure. La bielle est équipée sur au moins une de ses extrémités d'un élément de jonction 10 comprenant sur son extrémité libre des moyens de jonction 11 et 13 qui servent à relier la bielle sur son emplacement. Selon la figure 1, la bielle 1 comprend un second élément de jonction 20 identique au premier élément de jonction 10 et deux filetages opposés. L'élément de jonction 20 comprend sur son extrémité libre des moyens de jonction 21 et 23. Dans le mode de réalisation préféré de l'invention, l'élément de jonction 10 et 20 est une fourche. Cependant, il pourrait être une chape ou une rotule sans sortir du cadre de l'invention. La fourche 10 comprend deux extrémités 11 munies chacune d'un orifice 13 et la fourche 20 comprend deux extrémités 21 munies chacune d'un orifice 23. La bielle 1 est équipée d'au moins un dispositif de couple résistant 30 et/ou 40 identique entre chaque fourche et le corps de bielle. Chaque dispositif de couple résistant comporte un élément presseur et un élément d'appui. L'élément presseur est réalisé selon différents modes de réalisation décrit plus loin dans la description.

La figure 2 illustre une fourche entière 10 ou 20 ainsi que la partie du dispositif de couple résistant solidaire de la fourche qui correspond à l'élément d'appui du dispositif de couple résistant. La fourche 10 ou 20 a un axe central longitudinal représenté par l'axe 5. Sur la figure 3 la fourche 10 ou 20 et l'élément d'appui sont tournés de 90° autour de l'axe 5 par rapport à la figure 2. Sur les figures 2 et 3, l'élément d'appui du dispositif de couple résistant solidaire de la fourche est représenté comme faisant partie d'un élément distinct 300 de la fourche, rajouté lors du montage de la bielle, cependant il pourrait être usiné directement sur la fourche métallique, par exemple en aluminium, sans sortir du cadre de l'invention.

Le mode de réalisation décrit et illustré par les figures est donc le mode de réalisation préféré quand le dispositif d'appui et la fourche ne sont pas fabriqués à partir du même matériau par exemple pour une fourche en aluminium et un élément d'appui en thermoplastique. Ce mode de réalisation permet de réduire le risque de corrosion galvanique. Dans ce mode, l'élément d'appui est monté solidaire sur l'élément de jonction grâce à des moyens pour l'immobiliser sur l'élément de jonction. Ces moyens sont décrits dans la suite de la description.

L'extrémité libre de la fourche 10 se prolonge par une partie cylindrique centrale 101 qui supporte l'élément d'appui du dispositif de couple résistant.

La partie cylindrique centrale 101 est munie d'une collerette 102 située sur la face externe de la partie cylindrique 101 du côté de l'extrémité libre de la fourche.

La collerette est circulaire et située dans un plan perpendiculaire à l'axe 5 et son diamètre externe est supérieur au diamètre externe de la partie cylindrique de 0,1 mm à 0,5 mm. La collerette présente deux faces opposées, une face plane perpendiculaire à l'axe 5 et une face de forme tronconique. La face plane est située du côté de l'extrémité libre de la fourche tandis que la face de forme tronconique est dirigée dans la direction opposée donc vers le centre de la bielle.

A l'extrémité opposée de l'extrémité libre de la fourche, la partie cylindrique se prolonge par une gorge 105 adaptée pour y loger un joint d'étanchéité 115, un filetage 106 et deux lames 107 munies chacune sur leur face externe et à leur extrémité d'un élément d'arrêt sous forme d'un bourrelet 108 faisant saillie radialement vers l'extérieur. La partie cylindrique centrale 101 comprend au moins une fente 103 située sur sa surface externe et parallèle à l'axe 5 s'étendant de la gorge 105 vers la partie médiane de la partie cylindrique. Selon un autre mode de réalisation, la partie cylindrique centrale 101 comprend une seconde fente située également sur sa surface externe, parallèle et de préférence diamétralement opposée à la première fente. Le joint 115 garantie l'étanchéité entre le tube et la fourche contre la corrosion galvanique.

L'élément d'appui du dispositif de couple résistant et solidaire de la fourche est une denture 331 comprenant un ensemble de dents. Même dans le cas où l'élément d'appui est usiné directement avec la fourche, la denture 331 est de préférence droite, c'est-à-dire que les dents de la denture 331 sont réparties uniformément de façon circonférentielle et parallèlement à l'axe longitudinal 5. Selon le mode de réalisation illustré sur les figures 2 et 3, la denture 331 fait partie d'une bague crantée 300. La bague crantée a une forme cylindrique et a sur sa surface externe une partie lisse 332 et la denture 331.

La fourche 10 et 20 et la bague crantée 300 comprennent des moyens pour immobiliser la bague crantée sur la fourche. L'intérieur de la bague 300 n'est pas représenté sur les figures et comprend une rainure annulaire formée au bord de la face interne cylindrique de la bague du côté de sa partie lisse. Le diamètre interne de la bague crantée est égal ou légèrement supérieur au diamètre externe de la partie cylindrique 101 de la fourche sur laquelle elle vient se positionner. La bague crantée est mise en place par enfilement sur la fourche par sa seconde extrémité située du côté opposé de son extrémité libre jusqu'à la collerette 102 de façon à ce que sa face interne soit en appui surfacique sur la face externe de la partie cylindrique 101 de la fourche. La forme complémentaire de la collerette 102 et de la rainure annulaire de la bague permet le glissement de la bague crantée par-dessus la collerette en exerçant un effort suffisant afin que celle-ci vienne s'insérer dans la rainure, la rainure de la bague crantée et la collerette 102 coopérant ainsi ensemble. La face plane et perpendiculaire de la collerette empêche le retrait de la bague par glissement dans le sens opposé à sa mise en place. Dans le cas où l'élément d'appui est usiné directement avec la fourche, la denture 331 est située sur la face externe de la partie cylindrique 101.

La bague crantée 300 comprend également au moins un bossage rectiligne formée sur sa face interne. Ce bossage rectiligne s'étend du bord de la bague du côté de la partie lisse jusqu'à sa partie médiane et est parallèle à l'axe longitudinal 5. La forme de ce bossage est complémentaire avec la fente 103 de la partie cylindrique 101 afin que le bossage de la bague crantée 300 et la fente 103 coopèrent ensemble lorsque la bague est enfilée sur la fourche 10 ou 20. Dans un autre mode de réalisation, la bague comprend un deuxième bossage diamétralement opposé sur sa surface interne afin que chaque bossage coopère avec chacune des deux fentes de la fourche.

La coopération de la collerette 102 avec la rainure de la bague ainsi que le joint d'étanchéité 115 garantissent que la bague 300 est maintenue immobile par rapport à la fourche contre un mouvement de translation dans les deux directions de l'axe longitudinal 5. De même, la coopération de la fente 103 avec le bossage de la bague empêche tout mouvement de rotation de la bague autour de l'axe longitudinale 5. Donc, une fois la bague crantée 300 mise en place sur la fourche, elle est immobilisée par rapport à celle-ci.

La bielle 1 comprend au moins un élément de fixation adapté pour relier les deux extrémités 11 de la fourche 10 selon une direction transversale à l'axe longitudinal de la bielle. L'élément de fixation est un clip d'encliquetage 130 comprenant une goupille 131 traversant les deux ouvertures 13 ou les deux ouvertures 23 des extrémités 11 ou des extrémités 21 de la fourche 10 ou 20 par l'intermédiaire de deux bagues 133. La goupille 131 est reliée à un clip 132 qui vient s'encliqueter de façon élastique autour de la partie cylindrique centrale 101 de la fourche, sur la partie lisse 332 de la bague crantée ou directement sur la fourche dans le cas où l'élément d'appui est usiné directement sur la fourche. Une fois mis en place, le clip d'encliquetage 130 permet d'accoupler et verrouiller la bielle à un organe extérieur sans empêcher l'ajustement de sa longueur.

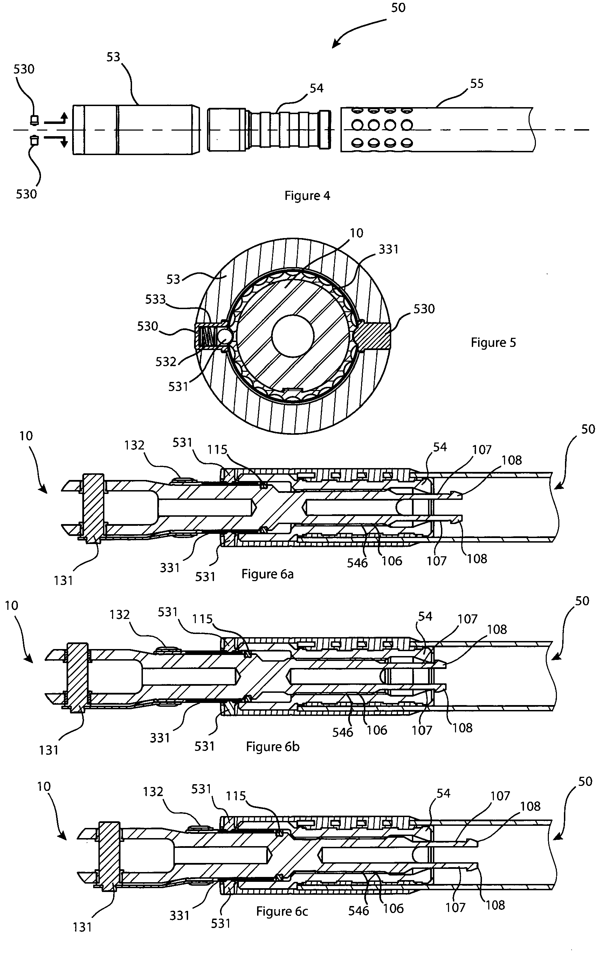

La figure 4 illustre une des deux extrémités du corps de bielle 50 en vue éclatée. Elle est composée d'un embout 53 de forme cylindrique, d'un insert fileté 54 de forme cylindrique et d'un tube 55. L'insert fileté est assemblé et fixé au tube grâce à l'embout réalisé en partie autour de l'insert fileté, entre l'insert fileté et le tube et autour du tube par un procédé d'injection de thermoplastique ou de sur-injection de thermoplastique sur une pièce métallique tel que décrit dans la demande de brevet EP 3 302 916.

Cet assemblage présente l'avantage d'être réalisé en peu d'étapes et de résister à de fortes traction, compression et gradient de température et avec des matériaux de coefficient de dilatation différent. En effet, l'embout est réalisé en thermoplastique ou composite de thermoplastique et le tube est fabriqué à partir d'un composite thermoplastique ou thermodurcissable par exemple du carbone thermodurcissable. L'insert fileté peut être en polymère tel qu'un thermoplastique mais aussi en matière métallique ou une combinaison des deux. La matière métallique peut être de l'aluminium ou du titane ou un alliage des deux. La fourche est constituée à ses deux extrémités d'une structure tubulaire creuse, pour des raisons de poids.

L'élément presseur du dispositif de couple résistant 30, solidaire du corps de bielle 50, est destiné à coopérer avec l'élément d'appui du dispositif de couple résistant donc avec la denture 331. Selon un premier mode de réalisation de l'invention, l'élément presseur du dispositif de couple résistant 30 comprend au moins un poussoir à bille 530 et le moyen de fixation de l'élément presseur est un logement 533 par poussoir à bille 530, chaque logement 533 étant prévu dans l'épaisseur des parois du corps de bielle et plus précisément dans l'épaisseur de la paroi de l'embout 53 du côté opposé au tube 55.

La figure 5 représente une coupe transversale de la bielle perpendiculaire à l'axe 5 comprenant deux poussoirs à bille 530 selon un mode de réalisation préféré. Les poussoirs à bille sont à bille et à ressort. Un ressort 532 comprime une bille 531 montée libre dans le poussoir à bille et dont une partie de la surface affleure à l'extérieur du poussoir. Le poussoir à bille comporte sur sa face externe du côté de la bille une collerette qui vient en butée contre un épaulement du logement 533 lorsqu'il est inséré dedans par une ouverture sur la face interne de la paroi de l'embout 53. La forme du logement 533 du poussoir à bille 530 est adaptée pour immobiliser le poussoir contre tout mouvement de translation dans les deux directions de l'axe longitudinale 5 de la bielle. Le logement 533 est donc de préférence cylindrique de diamètre égal ou légèrement supérieur au diamètre de la partie du poussoir à bille sans la collerette.

Lorsque la fourche 10 et le corps de bielle 50 sont assemblés ensemble, la surface affleurante de la bille 531 de chaque poussoir à bille 530 est en contact permanent avec la denture 331 du dispositif de couple résistant. Les poussoirs à bille ne peuvent plus être retirés de leur logement car ils sont coincés entre l'embout 53 et la denture 331.

La surface affleurant de chaque bille coopère avec un creux de la denture 331. De préférence, la dimension des billes est adaptée pour coopérer avec un creux de la denture 331 et la forme des creux de la denture 331 est complémentaire avec la forme des billes. Les poussoirs à bille sont solidaires de l'embout 53 et donc du corps de bielle. La rotation du corps de bielle entraine en rotation les poussoirs à bille 530. Le ressort de chaque poussoir à bille exerce un effort sur la bille et donc sur la denture 331 qui augmente pendant le passage de la bille d'un creux entre deux dents au creux adjacent. Cet effort oppose une résistance au mouvement de rotation du corps de bielle par rapport à la fourche par frottement de la bille contre la denture qui fait que l'opérateur doit exercer un effort de couple nécessaire et suffisant pour faire tourner le corps de bielle par rapport à la fourche. Ce couple nécessaire et suffisant doit être supérieur au couple résistant de chaque bille 533 sur la denture 331.

Chaque poussoir à bille procure un effet ressort ponctuel, indépendant et égal sur la denture, exercé par le ressort qui pousse sur la bille et agit uniquement dans la direction de l'axe du poussoir afin de pousser la bille dans un creux de la denture. L'effort exercé par chaque bille sur la denture 331 est alors identique et prédictible ce qui présente l'avantage de pouvoir dimensionner l'effort désiré en augmentant ou diminuant le nombre de poussoir à bille. Le nombre de poussoir peut être compris entre 1 et 8.

Les figures 6a, 6b et 6c, illustrent une coupe longitudinale d'une extrémité de la bielle équipée de la fourche 10 selon trois positions de la fourche 10 par rapport au corps de bielle 50. La fourche est insérée dans le corps de bielle par l'embout 53 jusqu'à ce que le filetage extérieur 106 de la fourche coopère avec un filetage 546 situé sur la face interne de l'insert 54. La fourche est alors vissée jusqu'à ce que l'extrémité 108 des lames 107 faisant saillie radialement de la fourche 10 dépassent l'extrémité de l'insert 54, les lames 107 munies du bourrelet 108 à leurs extrémités servent alors de moyens d'arrêt de la fourche dans le corps de bielle en empêchant celle-ci d'être retirée lors d'un dévissage de la fourche. En effet, comme on peut le voir sur la figure 6b, la taille maximum de la bielle est atteinte lorsque l'épaulement du bourrelet 108 de l'extrémité des lames 107 est en butée contre l'extrémité de l'insert 54.

La longueur de la bielle peut être ajustée par vissage ou dévissage du corps de bielle par rapport à la fourche. Dans le cas d'une bielle avec une fourche à chaque extrémité, le corps de bielle 50 comporte deux inserts filetés 54 munis chacun d'un filet 546 et deux embouts 53. Le dispositif de filetage de la deuxième fourche est orienté dans le sens inverse au dispositif de filetage de la première fourche afin que la rotation dans un sens du corps de bielle entraine la sortie des deux fourches et la rotation du corps de bielle dans le sens inverse entraine l'entrée des deux fourches dans le corps de bielle. La figure 6c représente la position de la bielle lorsque la fourche 10 est rentrée au maximum et la figure 6a représente une position intermédiaire de la fourche. Par conséquent, la fourche peut se déplacer en tournant dans le corps de bielle 50 entre deux positions sans pouvoir être retiré du corps de bielle grâce aux moyens d'arrêt 107 et 108 prévus pour bloquer la fourche dans le corps de bielle et qui sont automatiquement actifs lors de l'assemblage de la bielle.

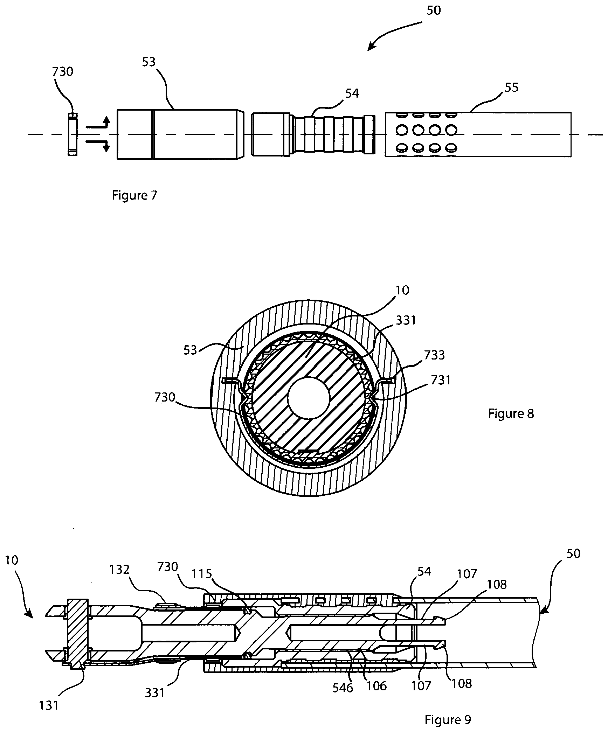

Selon un second mode de réalisation de l'invention illustré sur les figures 7, 8 et 9, l'élément presseur du dispositif de couplage résistant solidaire avec le corps de bielle comprend au moins une lame ressort 730 et l'embout 53 comprend au moins un moyen de fixation de l'élément presseur. Dans le cas de lame ressort 730, le moyen de fixation est au moins un logement 733 par lame ressort 730, chaque logement 733 étant prévu à l'intérieur de l'embout 53 du côté opposé au tube 55.

La lame ressort 730 est vu en détails sur la figure 7 qui représente une coupe transversale de la bielle perpendiculaire à l'axe 5. La lame ressort 730 entoure en partie la denture 331. Au moins une des deux extrémités de la lame ressort 730 est insérée dans un logement 733 sous forme d'une encoche prévue sur la surface interne dans l'épaisseur des parois du corps de bielle et plus précisément dans l'épaisseur des parois de l'embout 53. La forme du logement d'au moins une extrémité de la lame ressort est adaptée pour immobiliser la lame ressort contre tout mouvement de translation dans les deux directions de l'axe longitudinale 5. Le positionnement de la lame ressort dans son logement de l'embout 53 rend la lame solidaire de l'embout 53 et donc solidaire du corps de bielle 50.

D'autre part, une fois que la fourche est insérée dans le corps de bielle, la lame ressort ne peut plus être retirée de son emplacement car elle est coincée entre l'embout 53 et la denture 331 du dispositif de couple résistant. La lame 730 est coincée mais pas totalement immobilisée de sorte qu'il existe un espace entre l'embout 53 et la denture 331 pour que la lame ressort exerce son élasticité. La lame 730 comporte au moins une dent 731 dont la forme est adaptée pour coopérer avec un creux de la denture 331. Lorsque la fourche est assemblée sur le corps de bielle 50, la dent 731 est en contact permanent avec la denture 331 du dispositif de couple résistant.

De préférence, le dispositif selon l'invention comprend plus d'une lame ressort, chaque lame ressort est dotée d'une seule dent 731 et toutes les lames ressort sont identiques. Les lames ressorts sont alors positionnées côte à côte dans l'embout de façon à ce que les dents 731 soient uniformément réparties angulairement. Ceci présente l'avantage de centrer la fourche dans le corps de bielle. Chaque lame a au moins une extrémité insérée dans une encoche 733 prévue dans la paroi de l'embout 53. Chaque lame ressort a un effet ressort ponctuel, indépendant et égal sur la denture exercé par la lame qui pousse la dent 731 dans un creux de la denture 331.

L'effort exercée par chaque dent 731 sur la bague crantée 300 donc sur la denture 331 est alors identique et prédictible ce qui présente l'avantage de pouvoir dimensionner l'effort désiré en augmentant ou diminuant le nombre de lames comme pour les poussoirs à bille.

Dans le cas de deux lames ressort avec pour chaque lame une unique dent, les lames sont positionnées de façon à être symétriques par rapport à un plan passant par l'axe longitudinal 5 de la bielle. Les deux dents sont donc diamétralement opposées et si une seule extrémité de chaque lame est insérée dans un logement de l'embout, ce sont soient les deux extrémités situées les plus près des dents, soient les deux extrémités les plus éloignées des dents. Ce mode de réalisation garantit, comme le premier mode de réalisation, que le couple résistant ne dépend pas du sens de rotation du corps de bielle par rapport à la fourche.

Selon une variante du second mode de réalisation, la lame ressort comporte deux dents 731, et celles-ci sont diamétralement opposées comme on peut le voir sur la figure 5.

Par rapport à une seule lame ressort munie de deux dents, l'effet de deux poussoirs à bille peut davantage être prédit et dimensionné car ils exercent des efforts indépendants l'un de l'autre. De même, une lame ressort munie de multiples dents n'aura pas une réaction équivalente à un nombre équivalent de lame ressort à une dent qui exerce chacune un effort indépendant comme les poussoirs à billes. Les solutions à plusieurs poussoirs à billes ou plusieurs lames ressort à une seule dent seront donc préférées à une lame ressort à plusieurs dents. Dans tous les modes de réalisation de l'invention, quand il y a plusieurs éléments presseurs donc une pluralité de poussoirs à bille ou de lames ressort, ils sont indépendants les uns des autres et sont répartis sur le pourtour du corps de bielle 50 donc de l'embout 53 de façon uniforme angulairement.

La rotation du corps de bielle donc de l'embout 53 entraine en rotation la lame ressort 730. L'effet ressort de chaque lame exerce un effort sur la dent 731 donc sur la denture 331 qui augmente pendant le passage de la dent 731 d'un creux entre deux dents de la denture 331 au creux adjacent. Cet effort oppose une résistance au mouvement de rotation du corps de bielle par rapport à la fourche par frottement de la dent 731 contre la denture qui fait que l'opérateur doit exercer un effort de couple nécessaire et suffisant pour faire tourner le corps de bielle par rapport à la fourche. Ce couple nécessaire et suffisant doit être supérieur au couple résistant de la dent 731 sur la denture 331.

La figure 9 illustre une coupe longitudinale d'une extrémité de la bielle selon le second mode de réalisation lorsque la fourche est dans une position intermédiaire entre la position où elle est sortie au maximum en référence à la figure 6b et la position où elle est rentrée au maximum en référence à la figure 6c.

Quel que soit le mode de réalisation de l'invention, quand aucun couple en rotation n'est exercé sur la bielle, les éléments presseurs exercent un effort radial sur l'élément d'appui perpendiculaire à l'axe longitudinal 5 de la bielle. Quand un couple en rotation est exercé sur la bielle, l'élément presseur exerce un effort radial et un effort tangentiel sur l'élément d'appui, les deux efforts étant situés dans un plan transversal et perpendiculaire à l'axe longitudinal 5 de la bielle.

La résultante de ces deux efforts contribue au couple résistant exercé sur la bielle. Plus l'angle entre deux dents de la denture 331 diminue et plus le couple résistant augmente. L'angle entre deux dents de la denture 331 est compris entre 60 et 120 degrés. La bielle selon l'invention fournit un couple résistant avec de préférence une valeur définie entre 0.5Nm et 10Nm et de préférence entre 1Nm et 3 Nm.

Le dispositif de couple résistant garantit la longueur réglée de la bielle en maintenant un couple minimum résistant à un déréglage une fois que la bielle a été installée et ajustée en longueur et ceci, même en cas d'installation sur des structures soumises à des vibrations.

Le couple résistant de la bielle selon l'invention pouvant être augmentée en augmentant le nombre de poussoir à bille ou de lame ressort, la bielle selon l'invention peut être adaptée à des structures davantage sollicitées sans nécessiter beaucoup de modifications dans son procédé de fabrication. En effet, une pluralité de logements pour poussoirs à billes ou lames ressort peut-être prévu à la fabrication de l'embout et être pourvu selon les besoins du nombre requis de poussoirs ou de lames pour obtenir une bielle avec le couple résistant désiré.

Le couple exercé pour mettre en mouvement de rotation le corps de bielle s'applique dans un même plan transversal que le couple résistant exercé par le dispositif de couple résistant de la bielle selon l'invention. Ceci est réalisé car le moyen de fixation de l'élément presseur et l'élément presseur ont un plan de symétrie commun et perpendiculaire à l'axe longitudinale 5 de la bielle. Ce qui revient à dire que le logement 533 et 733 de chaque élément presseur et l'élément presseur ont un plan de symétrie commun et perpendiculaire à l'axe longitudinale 5 de la bielle. L'effort exercé par l'élément presseur est également contenu dans ce plan. Autrement dit, le moyen de fixation de l'élément presseur sur l'embout n'est pas déporté le long de l'axe longitudinal par rapport à l'axe de l'effort qu'il exerce.

D'autre part, dans toutes les positions de la fourche dans le corps de bielle, la surface en contact des éléments presseurs, avec les dents de la denture 331 est la même. Ces caractéristiques présentent l'avantage que le couple à exercer pour faire varier la longueur de la bielle est constant quelle que soit la position de la fourche par rapport au corps de bielle.

Le procédé de fabrication et d'assemblage préféré d'une bielle selon l'invention adaptée pour être utilisée sur un aéronef comprend les étapes suivantes :
a) le corps de bielle 50 composé de l'embout 53, de l'insert fileté 54 et du tube 55 est fabriqué et assemblé selon une seule étape d'injection,
b) l'élément de jonction 10, 20 est usiné d'une seule pièce de préférence dans un matériau métallique, avec une première extrémité libre et une seconde extrémité comportant un dispositif d'arrêt 107, 108,
c) la bague crantée 300 comprenant la denture 331 est montée solidairement sur l'élément de jonction,
d) le joint d'étanchéité 115 est placé dans la gorge 105 prévu sur l'élément de jonction à l'extrémité de la bague crantée,
e) au moins un poussoir à bille 530 ou une lame ressort 730 est placé dans le logement prévu à cet effet dans l'épaisseur de la paroi de l'embout,
f) l'élément de jonction est inséré et vissé dans le corps de bielle par coopération des filetages et jusqu'à ce que les deux lames 107, situées à l'extrémité opposée de l'extrémité libre de l'élément de jonction, parviennent en butée par leur élément d'arrêt sous forme d'un bourrelet 108 faisant saillie radialement vers l'extérieur, contre l'extrémité de l'insert fileté, le dispositif d'arrêt étant ainsi automatiquement mis en place.

Selon un procédé de fabrication et d'assemblage de la bielle selon l'invention adaptée pour être utilisée sur tout type de structure, la denture 331 est directement usinée sur l'élément de jonction. Le procédé comprend les étapes suivantes :
a) le corps de bielle 50 composé de l'embout 53, de l'insert fileté 54 et du tube 55 est fabriqué et assemblé selon une seule étape d'injection,
b) l'élément de jonction 10, 20 est usiné d'une seule pièce de préférence dans un matériau métallique, avec une première extrémité libre et une seconde extrémité comportant un dispositif d'arrêt 107, 108, et une partie centrale cylindrique comprenant la denture 331,
c) le joint d'étanchéité 115 est placé dans la gorge 105 prévu sur l'élément de jonction,
d) au moins un poussoir à bille 530 ou une lame ressort 730 est placé dans le logement prévu à cet effet dans l'épaisseur de la paroi de l'embout,
e) l'élément de jonction est inséré et vissé dans le corps de bielle par coopération des filetages et jusqu'à ce que les deux lames 107, situées à l'extrémité opposée de l'extrémité libre de l'élément de jonction, parviennent en butée par leur élément d'arrêt sous forme d'un bourrelet 108 faisant saillie radialement vers l'extérieur, contre l'extrémité de l'insert fileté, le dispositif d'arrêt étant ainsi automatiquement mis en place.

Le procédé de fabrication de la bielle est tel qu'une fois la bielle assemblée il n'est plus possible de séparer la fourche du corps de bielle, les moyens d'arrêt de la fourche dans le corps de bielle se mettant en place automatiquement. La bielle assemblée est un dispositif monobloc. Par conséquent, les deux éléments du dispositif de couplage résistant (dont l'élément d'appui solidaire de la fourche et dont l'élément presseur solidaire du corps de bielle) ne peuvent plus être désengagés l'un de l'autre. La bielle ne peut pas changer de longueur sans que le dispositif de couple résistant ne soit actionné.

La bielle selon l'invention présente l'avantage d'avoir un dispositif de couple résistant tout le temps actif et indémontable. Même en cas de mauvais montage du clip d'encliquetage par l'opérateur, le couple résistant est garanti par la bielle selon l'invention, ce qui est primordial en cas d'utilisation sur un aéronef. En effet, le clip d'encliquetage ayant pour unique fonction unique de relier la bielle à l'endroit prévu de son installation, il n'applique pas d'effort supplémentaire sur le mouvement de rotation du corps de bielle par rapport à la fourche.

D'autre part, le crantage n'étant pas placé sur la partie de la bielle de plus grand diamètre, la bielle selon l'invention diminue le risque de blessure pour l'opérateur qui manipule et met en place la bielle.

## Revendications

1. Bielle réglable en longueur ayant un axe longitudinal (5), comprenant un corps de bielle (50) pourvu d'au moins un filetage intérieur (546), au moins un élément de jonction (10, 20) comportant un filetage extérieur (106) coopérant avec le filetage intérieur du corps de bielle, le vissage ou dévissage dudit corps de bielle par rapport audit élément de jonction permettant de régler la longueur de la bielle et au moins un dispositif de couple résistant (30, 40) entre ledit corps de bielle et ledit élément de jonction, ledit dispositif de couple résistant comprenant au moins un élément presseur (530, 730) et un élément d'appui, ledit élément presseur exerçant un effort sur ledit élément d'appui qui oppose une résistance au mouvement de rotation du corps de bielle par rapport audit élément de jonction, où l'élément d'appui est une denture (331) comprenant un ensemble de dents, solidaire de l'élément de jonction (10, 20) et l'élément presseur (530, 730) est solidaire du corps de bielle (50), en ce que l'effort exercé par l'élément presseur (530, 730) sur la denture (331) se fait dans une direction transversale et perpendiculaire à l'axe longitudinal de la bielle (50), et en ce que l'élément de jonction (10,20) comprend une extrémité libre munie de moyens de jonction (11, 13) ou (21, 23) qui se prolonge par une partie cylindrique centrale (101) qui supporte la denture (331) et une gorge (105) adaptée pour y loger un joint d'étanchéité (115).

2. Bielle selon la revendication 1, dans laquelle le corps de bielle (50) comprend au moins un moyen de fixation (533, 733) de l'élément presseur (530, 730), ledit moyen de fixation de l'élément presseur et ledit élément presseur ayant un plan de symétrie commun perpendiculaire à l'axe longitudinale (5) de la bielle.

3. Bielle selon la revendication 1 ou 2, dans laquelle l'élément de jonction (10, 20) peut se déplacer en tournant dans le corps de bielle (50) entre deux positions sans pouvoir être retiré du corps de bielle, des moyens d'arrêt (107, 108) étant prévus pour bloquer ledit élément de jonction dans ledit corps de bielle, lesdits moyens d'arrêts étant automatiquement actifs lors de l'assemblage de la bielle.

4. Bielle selon l'une des revendications 1 à 3, dans laquelle la denture (331) fait partie d'une bague crantée (300), ledit élément de jonction (10, 20) et ladite bague comprenant des moyens pour immobiliser la bague crantée sur l'élément de jonction (10, 20).

5. Bielle selon la revendication 4, dans laquelle la partie cylindrique centrale (101) comporte sur sa face externe du côté de l'extrémité libre de l'élément de jonction une collerette (102) circulaire et située dans un plan perpendiculaire à l'axe longitudinal (5) et au moins une fente (103) parallèle à l'axe (5), le diamètre externe de ladite collerette étant supérieur de 0,1 mm à 0,5 mm au diamètre externe de la partie cylindrique (101), ladite collerette présentant deux faces opposées, une face plane perpendiculaire à l'axe (5) située du côté de l'extrémité libre dudit élément de jonction et une face de forme tronconique dirigée vers le centre de la bielle.

6. Bielle selon la revendication 5, dans laquelle le diamètre interne de la bague crantée de forme cylindrique est égal ou légèrement supérieur au diamètre externe de la partie cylindrique (101) de l'élément de jonction, ladite bague crantée comprenant sur sa face interne cylindrique une rainure annulaire de forme complémentaire à celle de la collerette (102) et au moins un bossage rectiligne de forme complémentaire à celle de la fente (103) de façon à ce que lorsque la bague crantée (300) est enfilée sur l'élément de jonction (10, 20), la rainure de la bague crantée coopère avec la collerette (102) et le bossage de la bague crantée (300) coopère avec la fente (103) afin d'immobiliser la bague crantée (300) sur l'élément de jonction (10, 20).

7. Bielle selon l'une des revendications 1 à 6, dans laquelle ledit corps de bielle (50) creux est composé d'un embout (53), d'un insert fileté (54) comprenant le filetage (546) sur sa face interne et d'un tube (55), ledit insert fileté étant fixé audit tube grâce audit embout réalisé en partie autour dudit insert fileté, entre ledit insert fileté et ledit tube et autour dudit tube, par un procédé d'injection de thermoplastique.

8. Bielle selon l'une des revendications 2 à 7, dans laquelle ledit élément presseur comprend au moins un poussoir à bille (530) ou au moins une lame ressort (730) , ledit moyen de fixation dudit élément presseur étant un logement (533) par poussoir à bille (530) ou au moins un logement (733) par lame ressort (730) prévu dans l'épaisseur de la paroi du corps de bielle (50), la forme dudit logement (533, 733) étant adaptée pour immobiliser ledit poussoir ou ladite lame contre tout mouvement de translation dans les deux directions de l'axe longitudinal (5) de la bielle.

9. Bielle selon la revendication 8, dans laquelle en cas de pluralité de poussoirs à billes (530) ou de lames ressort (730), ils sont indépendants les uns des autres et sont répartis sur le pourtour du corps de bielle (50) de façon uniforme angulairement.

10. Bielle selon la revendication 8 ou 9, dans laquelle ledit poussoir à bille (530) comprend un ressort (532) qui comprime une bille (531) montée libre dans ledit poussoir, une partie de la surface de ladite bille affleurant à l'extérieur dudit poussoir est en contact permanent avec la denture (331) du dispositif de couple résistant lorsque l'élément de jonction (10, 20) est assemblé sur le corps de bielle (50), ladite bille ayant une dimension adaptée pour coopérer avec un creux de la denture (331).

11. Bielle selon la revendication 8 ou 9, dans laquelle ladite lame ressort (730) entoure en partie la denture (331) et au moins une de ses extrémités est insérée dans un logement (733), ladite lame comportant au moins une dent (731) dont la forme est adaptée pour coopérer avec un creux de la denture (331), ladite dent (731) étant en contact permanent avec la denture (331) du dispositif de couple résistant lorsque l'élément de jonction (10, 20) est assemblé sur le corps de bielle (50).

12. Bielle selon l'une des revendications 1 à 11 dans laquelle ledit élément de jonction (10) ou (20) est une fourche, lesdits moyens de jonction de la fourche (10) étant deux extrémités (11) munie chacune d'un orifice (13) et lesdits moyens de jonction de la fourche (20) étant deux extrémités (21) munie chacune d'un orifice (23), ladite bielle comprenant au moins un élément de fixation sous forme d'un clip d'encliquetage (130) comprenant une goupille (131) destiné à traverser les deux ouvertures (13) ou (23) de la fourche (10) ou (20) par l'intermédiaire de deux bagues (133), ladite goupille étant reliée à un clip (132) qui vient s'encliqueter de façon élastique autour de la partie centrale cylindrique de la fourche (10, 20) afin d'accoupler la bielle à un organe extérieur sans empêcher l'ajustement de sa longueur.

13. Procédé pour fabriquer et assembler une bielle selon l'une quelconque des revendications 1 à 12 prise en combinaison avec les revendications 4, 7 et 8, comprenant les étapes suivantes :
a) le corps de bielle (50) composé de l'embout (53), de l'insert fileté (54) et du tube (55) est fabriqué et assemblé selon une seule étape d'injection,
b) l'élément de jonction (10, 20) est usiné d'une seule pièce de préférence dans un matériau métallique, avec une première extrémité libre et une seconde extrémité comportant un dispositif d'arrêt (107, 108),
c) la bague crantée (300) est montée solidairement sur ledit élément de jonction,
d) le joint d'étanchéité (115) est placé dans la gorge (105) prévu sur ledit élément de jonction à l'extrémité de ladite bague crantée,
e) au moins un poussoir à bille (530) ou une lame ressort (730) est placé dans le logement prévu à cet effet dans l'épaisseur de la paroi de l'embout,
f) ledit élément de jonction est inséré et vissé dans ledit corps de bielle par coopération des filetages et jusqu'à ce que les deux lames (107), situées à l'extrémité opposée de l'extrémité libre de l'élément de jonction, parviennent en butée par leur élément d'arrêt sous forme d'un bourrelet (108) faisant saillie radialement vers l'extérieur, contre l'extrémité de l'insert fileté, le dispositif d'arrêt étant ainsi automatiquement mis en place.

14. Procédé pour fabriquer et assembler une bielle selon l'une quelconque des revendications 1 à 12 prise en combinaison avec les revendications 4, 7 et 8, comprenant les étapes suivantes :
a) le corps de bielle (50) composé de l'embout (53), de l'insert fileté (54) et du tube (55) est fabriqué et assemblé selon une seule étape d'injection,
b) l'élément de jonction (10, 20) est usiné d'une seule pièce de préférence dans un matériau métallique, avec une première extrémité libre et une seconde extrémité comportant un dispositif d'arrêt (107, 108), et une partie centrale cylindrique comprenant la denture (331),
c) le joint d'étanchéité (115) est placé dans la gorge (105) prévu sur ledit élément de jonction,
d) au moins un poussoir à bille (530) ou une lame ressort (730) est placé dans le logement prévu à cet effet dans l'épaisseur de la paroi de l'embout,
e) ledit élément de jonction est inséré et vissé dans ledit corps de bielle par coopération des filetages et jusqu'à ce que les deux lames (107), situées à l'extrémité opposée de l'extrémité libre de l'élément de jonction, parviennent en butée par leur élément d'arrêt sous forme d'un bourrelet (108) faisant saillie radialement vers l'extérieur, contre l'extrémité de l'insert fileté, le dispositif d'arrêt étant ainsi automatiquement mis en place.

## Patentansprüche

1. Längenverstellbare Pleuelstange mit einer Längsachse (5), umfassend einen Pleuelkörper (50), der mit mindestens einem Innengewinde (546) ausgestattet ist, mindestens ein Verbindungselement (10, 20) mit einem Außengewinde (106), das mit dem Innengewinde des Pleuelkörpers zusammenwirkt, wobei das Ein- oder Ausschrauben des Pleuelkörpers in Bezug auf das Verbindungselement die Verstellung der Länge der Pleuelstange ermöglicht, und mindestens eine Widerstandsdrehmomentvorrichtung (30, 40) zwischen dem Pleuelkörper und dem Verbindungselement, wobei die Widerstandsdrehmomentvorrichtung mindestens ein Druckelement (530, 730) und ein Abstützelement umfasst, wobei das Druckelement eine Kraft auf das Abstützelement ausübt, die der Rotationsbewegung des Pleuelkörpers in Bezug auf das Verbindungselement einen Widerstand entgegensetzt,
wobei das Abstützelement eine Verzahnung (331) ist, die eine Gruppe von Zähnen umfasst, die mit dem Verbindungselement (10, 20) fest verbunden ist, und das Druckelement (530, 730) mit dem Pleuelkörper (50) fest verbunden ist, **so dass** die vom Druckelement (530, 730) auf die Verzahnung (331) ausgeübte Kraft in einer Querrichtung und senkrecht zur Längsachse der Pleuelstange (50) erfolgt,
und **so dass** das Verbindungselement (10, 20) ein freies Ende umfasst, das mit Verbindungsmitteln (11, 13) oder (21, 23) versehen ist, das sich in einen zentralen zylindrischen Teil (101) verlängert, der die Verzahnung (331) und eine Nut (105) trägt, die dazu angepasst ist, eine Dichtung (115) darin aufzunehmen.

2. Pleuelstange nach Anspruch 1, wobei der Pleuelkörper (50) mindestens ein Befestigungsmittel (533, 733) für das Druckelement (530, 730) umfasst, wobei das Befestigungsmittel für das Druckelement und das Druckelement eine gemeinsame Symmetrieebene senkrecht zur Längsachse (5) der Pleuelstange haben.

3. Pleuelstange nach Anspruch 1 oder 2, wobei das Verbindungselement (10, 20) durch Drehen im Pleuelkörper (50) zwischen zwei Positionen bewegt werden kann, ohne aus dem Pleuelkörper herausgezogen werden zu können, wobei Rastmittel (107, 108) vorgesehen sind, um das Verbindungselement in dem Pleuelkörper zu arretieren, wobei die Rastmittel beim Zusammenbau der Pleuelstange automatisch aktiv sind.

4. Pleuelstange nach einem der Ansprüche 1 bis 3, wobei die Verzahnung (331) Teil eines gezahnten Rings (300) ist, wobei das Verbindungselement (10, 20) und der Ring Mittel zum Fixieren des gezahnten Rings am Verbindungselement (10, 20) umfassen.

5. Pleuelstange nach Anspruch 4, wobei der zentrale zylindrische Teil (101) auf seiner Außenfläche auf der Seite des freien Endes des Verbindungselements einen Kragen (102), der kreisförmig ist und sich in einer Ebene senkrecht zur Längsachse (5) befindet, und mindestens einen Schlitz (103) parallel zur Achse (5) aufweist, wobei der Außendurchmesser des Kragens um 0,1 mm bis 0,5 mm größer ist als der Außendurchmesser des zylindrischen Teils (101), wobei der Kragen zwei gegenüberliegende Flächen aufweist, eine ebene Fläche senkrecht zur Achse (5), die sich auf der Seite des freien Endes des Verbindungselements befindet, und eine kegelstumpfförmige Fläche, die zu dem Zentrum der Pleuelstange hin gerichtet ist.

6. Pleuelstange nach Anspruch 5, wobei der Innendurchmesser des zylinderförmigen gezahnten Rings gleich oder etwas größer ist als der Außendurchmesser des zylindrischen Teils (101 ) des Verbindungselements, der gezahnte Ring auf seiner zylindrischen Innenfläche eine ringförmige Rille mit einer Form komplementär zu der des Kragens (102) und mindestens einen geradlinigen Vorsprung mit einer Form komplementär zu der des Schlitzes (103) aufweist, so dass, wenn der gezahnte Ring (300) auf das Verbindungselement (10, 20) aufgezogen ist, die Rille des gezahnten Rings mit dem Kragen (102) zusammenwirkt und der Vorsprung des gezahnten Rings (300) mit dem Schlitz (103) zusammenwirkt, um den gezahnten Ring (300) auf dem Verbindungselement (10, 20) zu fixieren.

7. Pleuelstange nach einem der Ansprüche 1 bis 6, wobei der hohle Pleuelkörper (50) aus einem Endstück (53), einem Gewindeeinsatz (54), der das Gewinde (546) auf seiner Innenfläche umfasst, und einem Rohr (55) besteht, wobei der Gewindeeinsatz an dem Rohr durch das Endstück befestigt ist, das teilweise um den Gewindeeinsatz, zwischen dem Gewindeeinsatz und dem Rohr und um das Rohr herum durch ein Thermoplast-Spritzgussverfahren gefertigt wird.

8. Pleuelstange nach einem der Ansprüche 2 bis 7, wobei das Druckelement mindestens einen Kugelstößel (530) oder mindestens ein Federblatt (730) umfasst, wobei das Mittel zur Befestigung des Druckelements eine Aufnahme (533) pro Kugelstößel (530) oder mindestens eine Aufnahme (733) pro Blattfeder (730) ist, die in der Dicke der Wand des Pleuelkörpers (50) vorgesehen ist, wobei die Form der Aufnahme (533, 733) so angepasst ist, dass sie den Stößel oder das Blatt gegen eine Translationsbewegung in beiden Richtungen der Längsachse (5) der Pleuelstange fixiert.

9. Pleuelstange nach Anspruch 8, wobei im Falle mehrerer Kugelstößel (530) oder Federblätter (730) diese unabhängig voneinander sind und über den Umfang des Pleuelkörpers (50) winkelmäßig gleichmäßig verteilt sind.

10. Pleuelstange nach Anspruch 8 oder 9, wobei der Kugelstößel (530) eine Feder (532) umfasst, die eine Kugel (531) zusammendrückt, die frei in dem Stößel montiert ist, wobei ein Teil der Oberfläche der Kugel, der mit der Außenseite des Stößels bündig ist, in ständigem Kontakt mit der Verzahnung (331) der Widerstandsdrehmomentvorrichtung steht, wenn das Verbindungselement (10, 20) auf dem Pleuelkörper (50) zusammengebaut ist, wobei die Kugel eine Größe hat, die dazu angepasst ist, mit einer Aushöhlung der Verzahnung (331) zusammenzuwirken.

11. Pleuelstange nach Anspruch 8 oder 9, wobei das Federblatt (730) die Verzahnung (331) teilweise umgibt und mindestens eines seiner Enden in eine Aufnahme (733) eingesetzt ist, wobei das Blatt mindestens einen Zahn (731) aufweist, dessen Form dazu angepasst ist, mit einer Vertiefung der Verzahnung (331) zusammenzuwirken, wobei der Zahn (731) in ständigem Kontakt mit der Verzahnung (331) der Widerstandsdrehmomentvorrichtung steht, wenn das Verbindungselement (10, 20) auf dem Pleuelkörper (50) zusammengebaut ist.

12. Pleuelstange nach einem der Ansprüche 1 bis 11, wobei das Verbindungselement (10) oder (20) eine Gabel ist, wobei die Verbindungsmittel der Gabel (10) zwei Enden (11) sind, die jeweils mit einer Öffnung (13) versehen sind, und die Verbindungsmittel der Gabel (20) zwei Enden (21) sind, die jeweils mit einer Öffnung (23) versehen sind, wobei die Pleuelstange mindestens ein Befestigungselement in Form eines Einrastclips (130) mit einem Stift (131) umfasst, der dazu bestimmt ist, die beiden Öffnungen (13) oder (23) der Gabel (10) oder (20) über zwei Ringe (133) zu durchqueren, wobei der Stift mit einem Clip (132) verbunden ist, der elastisch um den zylindrischen zentralen Teil der Gabel (10, 20) einrastet, um die Pleuelstange an ein äußeres Organ anzukoppeln, ohne die Einstellung ihrer Länge zu verhindern.

13. Verfahren zur Herstellung und zum Zusammenbau einer Pleuelstange nach einem der Ansprüche 1 bis 12 in Kombination mit den Ansprüchen 4, 7 und 8, das die folgenden Schritte umfasst:
a) der Pleuelkörper (50), der aus dem Endstück (53), dem Gewindeeinsatz (54) und dem Rohr (55) besteht, wird in einem einzigen Spritzgussschritt hergestellt und zusammengebaut,
b) das Verbindungselement (10, 20) ist vorzugsweise aus einem metallischen Material einstückig bearbeitet, mit einem ersten freien Ende und einem zweiten Ende, das eine Rastvorrichtung (107, 108) aufweist,
c) der gezahnte Ring (300) ist fest an dem Verbindungselement montiert,
d) die Dichtung (115) ist in der Nut (105) angeordnet, die an dem Verbindungselement am Ende des gezahnten Rings vorgesehen ist,
e) mindestens ein Kugelstößel (530) oder ein Federblatt (730) ist in der dafür vorgesehenen Aufnahme in der Dicke der Wand des Endstücks angeordnet,
f) das Verbindungselement wird durch Zusammenwirken der Gewinde in den Pleuelkörper eingesetzt und eingeschraubt und bis die beiden Blätter (107), die sich am entgegengesetzten Ende des freien Endes des Verbindungselements befinden, mit ihrem Rastelement in Form eines radial nach außen vorstehenden Wulstes (108) gegen das Ende des Gewindeeinsatzes anstoßen, wodurch die Anschlageinrichtung automatisch in Position gebracht wird.

14. Verfahren zur Herstellung und zum Zusammenbau einer Pleuelstange nach einem der Ansprüche 1 bis 12 in Kombination mit den Ansprüchen 4, 7 und 8, das die folgenden Schritte umfasst:
a) der Pleuelkörper (50), der aus dem Endstück (53), dem Gewindeeinsatz (54) und dem Rohr (55) besteht, wird in einem einzigen Spritzgussschritt hergestellt und zusammengebaut,
b) das Verbindungselement (10, 20) ist vorzugsweise aus einem metallischen Material einstückig bearbeitet, mit einem ersten freien Ende und einem zweiten Ende, das eine Rastvorrichtung (107, 108) aufweist, und einem zylindrischen zentralen Teil, der die Verzahnung (331) umfasst,
c) die Dichtung (115) ist in der Nut (105) angeordnet, die an dem Verbindungselement vorgesehen ist,
d) mindestens ein Kugelstößel (530) oder ein Federblatt (730) ist in der dafür vorgesehenen Aufnahme in der Dicke der Wand des Endstücks angeordnet,
e) das Verbindungselement wird durch Zusammenwirken der Gewinde in den Pleuelkörper eingesetzt und eingeschraubt und bis die beiden Blätter (107), die sich am entgegengesetzten Ende des freien Endes des Verbindungselements befinden, mit ihrem Rastelement in Form eines radial nach außen vorstehenden Wulstes (108) gegen das Ende des Gewindeeinsatzes anstoßen, wodurch die Rastvorrichtung automatisch in Position gebracht wird.

## Claims

1. A length-adjustable connecting rod having a longitudinal axis (5), comprising a connecting-rod shank (50) provided with at least one internal thread (546), at least one connecting element (10, 20) comprising an external thread (106) cooperating with the internal thread of the connecting-rod shank, the screwing or unscrewing of said connecting-rod shank with respect to said connecting element allowing the length of the connecting rod to be adjusted, and at least one resisting torque device (30, 40) between said connecting-rod shank and said connecting element, said resisting torque device comprising at least one pressing element (530, 730) and a bearing element, said pressing element exerting a force on said bearing element that opposes a resistance to the rotational movement of the connecting-rod shank with respect to said connecting element,
wherein the bearing element is a toothing (331) comprising a set of teeth, integral with the connecting element (10, 20) and the pressing element (530, 730) is integral with the connecting-rod shank (50), in that the force exerted by the pressing element (530, 730) on the toothing (331) is in a transverse direction and perpendicular to the longitudinal axis of the connecting rod (50),
and in that the connecting element (10, 20) comprises a free end provided with connecting means (11, 13) or (21, 23), which extends into a central cylindrical portion (101) that supports the toothing (331) and a groove (105) adapted to house a gasket (115) therein.

2. The connecting rod according to claim 1, wherein the connecting-rod shank (50) comprises at least one means for securing (533, 733) the pressing element (530, 730), said means for securing the pressing element and said pressing element having a common plane of symmetry perpendicular to the longitudinal axis (5) of the connecting rod.

3. The connecting rod according to claim 1 or 2, wherein the connecting member (10, 20) is rotatably movable in the connecting-rod shank (50) between two positions without being removable from the connecting-rod shank, means of locking (107, 108) being provided for locking said connecting member in said connecting-rod shank, said means of locking being automatically active upon assembly of the connecting rod.

4. The connecting rod according to any of claims 1 to 3, wherein the toothing (331) forms part of a notched ring (300), said connecting member (10, 20) and said ring comprising means for securing the notched ring to the connecting member (10, 20).

5. The connecting rod according to claim 4, wherein the central cylindrical part (101) comprises on its external face on the side of the free end of the connecting element a circular flange (102) located in a plane perpendicular to the longitudinal axis (5) and at least one slot (103) parallel to the axis (5), the external diameter of the said flange being 0.1 mm to 0.5 mm greater than the external diameter of the cylindrical part (101), said flange having two opposite faces, a flat face perpendicular to the axis (5) situated on the side of the free end of the said connecting element and a truncated cone-shaped face directed towards the center of the connecting rod.

6. The connecting rod according to claim 5, wherein the internal diameter of the cylindrically shaped notched ring is equal to or slightly greater than the external diameter of the cylindrical part (101) of the connecting element, said notched ring comprising on its cylindrical inner face an annular groove of complementary shape to that of the flange (102) and at least one straight boss of complementary shape to that of the slot (103) so that when the notched ring (300) is slipped onto the connecting element (10, 20), the groove of the notched ring cooperates with the flange (102) and the boss of the notched ring (300) cooperates with the slot (103) in order to immobilize the notched ring (300) on the connecting element (10, 20).

7. The connecting rod according to any one of claims 1 to 6, wherein said hollow connecting-rod shank (50) is composed of a end cap (53), a threaded insert (54) comprising the thread (546) on its inner side and a tube (55), said threaded insert being attached to said tube by said end cap being made partly around said threaded insert, between said threaded insert and said tube and around said tube, by a thermoplastic injection process.

8. The connecting rod according to one of claims 2 to 7, wherein said pressing element comprises at least one ball plunger (530) or at least one spring leaf (730), said means for securing said pressing element being a receptacle (533) per ball plunger (530) or at least one receptacle (733) per spring leaf (730) provided in the thickness of the wall of the connecting-rod shank (50), the shape of said receptacle (533, 733) being adapted to immobilize said push rod or said leaf against any translational movement in both directions of the longitudinal axis (5) of the connecting rod.

9. The connecting rod according to claim 8, wherein in the case of a plurality of ball plungers (530) or leaf springs (730), they are independent of each other and are distributed around the circumference of the connecting-rod shank (50) in an angularly uniform manner.

10. The connecting rod according to claim 8 or 9, wherein said ball plunger (530) comprises a spring (532) that compresses a ball (531) loosely mounted in said plunger, a portion of the surface of said ball flush with the outside of said plunger is in permanent contact with the toothing (331) of the resisting torque device when the connecting element (10, 20) is assembled to the connecting-rod shank (50), said ball having a size adapted to cooperate with a recess of the toothing (331).

11. The connecting rod according to claim 8 or 9, wherein said leaf spring (730) partially surrounds the toothing (331) and at least one of its ends is inserted in a receptacle (733), said blade comprising at least one tooth (731) shaped to cooperate with a recess of the toothing (331), said tooth (731) being in permanent contact with the toothing (331) of the resisting torque device when the connecting element (10, 20) is assembled to the connecting-rod shank (50).

12. The connecting rod according to one of claims 1 to 11, wherein said connecting member (10) or (20) is a fork, said connecting means of the fork (10) being two ends (11) each provided with an opening (13) and said connecting means of the fork (20) being two ends (21) each provided with an opening (23) said connecting rod comprising at least one fastener in the form of a snap-in clip (130) comprising a pin (131) intended to pass through the two openings (13) or (23) of the fork (10) or (20) via two rings (133), said pin being connected to a clip (132) which snaps elastically around the cylindrical central part of the fork (10, 20) in order to couple the connecting rod to an external member without preventing the adjustment of its length.

13. A method of manufacturing a connecting rod according to any one of claims 1 to 12 taken in combination with claims 4, 7 and 8, comprising the following steps:
a) the connecting-rod shank (50) consisting of the end cap (53), the threaded insert (54) and the tube (55) is manufactured and assembled in a single injection-molding step,
b) the connecting element (10, 20) is machined in one piece, preferably from a metal material, with a first free end and a second end having a locking device (107, 108),
c) the notched ring (300) is integrally mounted on said connecting element,
d) the gasket (115) is placed in a groove (105) provided on the connecting element at the end of the notched ring,
e) at least one ball plunger (530) or leaf spring (730) is placed in the receptacle provided for this purpose in the wall thickness of the end cap,
f) said connecting element is inserted and screwed into said connecting-rod shank by cooperation of the threads and until the two blades (107) at the opposite end of the free end of the connecting element come to rest with their locking element in the form of a radially outwardly projecting bead (108) against the end of the threaded insert, the locking device thereby being automatically inserted.

14. A method of manufacturing a connecting rod according to any one of claims 1 to 12 taken in combination with claims 4, 7 and 8, comprising the following steps:
a) the connecting-rod shank (50) composed of the end cap (53), the threaded insert (54) and the tube (55) is manufactured and assembled in a single injection-molding step,
b) the connecting element (10, 20) is machined in one piece, preferably from a metal material, with a first free end and a second end having a locking device (107, 108), and a central portion comprising the toothing (331),
c) the gasket (115) is placed in the groove (105) provided on the connecting element,
d) at least one ball plunger (530) or leaf spring (730) is placed in the receptacle provided for this purpose in the wall thickness of the end cap,
e) said connecting element is inserted and screwed into said connecting-rod shank by cooperation of the threads and until the two blades (107) at the opposite end of the free end of the connecting element come to rest with their locking element in the form of a radially outwardly projecting bead (108) against the end of the threaded insert, the locking device thereby being automatically inserted.
